# EUROPEAN PATENT SPECIFICATION

(11) **EP 4 250 448 B1**
(45) Date of publication and mention of the grant of the patent: **26.03.2025**
(21) Application number: 22177739.4
(22) Date of filing: 08.06.2022
(51) Int. Cl.: H01M 50/204, H01M 50/244

(54) **ENERGY STORAGE RACK**
ENERGIESPEICHERGESTELL
BÂTI DE STOCKAGE D'ÉNERGIE

(30) Priority: 25.03.2022 CN 202210298977
(43) Date of publication of application: 27.09.2023
(73) Proprietor: CALB Co., Ltd., Changzhou City, Jiangsu Province (CN)
(72) Inventor: LI, Wei, Luoyang City, Henan Province (CN); SHI, Tengteng, Luoyang City, Henan Province (CN); LI, Fei, Luoyang City, Henan Province (CN)
(74) Representative: Becker, Eberhard

(56) References cited:
- CN-U- 217 062 331
- DE-A1- 102015 215 655
- DE-B4- 102011 051 622

## Description

### BACKGROUND

### Technical Field

The disclosure relates to the field of battery technology, and in particular, relates to an energy storage rack.

### Description of Related Art

In the design of the energy storage rack, the bearing capacity and stability of the energy storage rack are important. At present, the energy storage rack is generally composed of vertical columns and horizontal beams. The vertical columns are configured as the main support members since the vertical columns are required to support the weight of the entire battery cluster. However, the vertical columns provided by the related art exhibit insufficient overall strength, and as a result, the energy storage rack provides only low overall strength and exhibits limited bearing capacity and poor stability.

Document DE 10 2011 051622 B4 provides a reinforcement element for a sill of a motor vehicle. The reinforcement element is designed as a two-chamber profile and comprises profile parts which are connected to one another and form hollow chambers, characterized in that the reinforcement element is arranged encapsulated between two sill profiles and consists of the two-chamber profile with an inner and an outer profile part, which are arranged offset from one another in height and each profile part has a straight web in a common vertical center plane xx, to which the parked legs of the profile parts are connected, which are connected to corresponding legs of the sill profiles and which extend in the transverse direction in the profile parts. Reinforcing tubes are arranged, which penetrate the hollow chambers in mutually aligned openings and are firmly connected to the profile parts.

### SUMMARY

The disclosure aims to provide an energy storage rack. The invention is set out in the appended set of claims. The following disclosure serves a better understanding of the present invention.

The energy storage rack includes vertical columns and horizontal beams connected to each other. The vertical columns and the horizontal beams enclose accommodating cavities for accommodating battery insertion boxes. The vertical column is a hollow column structure formed by a first beam and a second beam butting against each other. The first beam includes a first main body and first connecting plates, the first main body has a first groove, and two sides of the first main body are respectively connected to the first connecting plates. The first connecting plates are located at an opening of the first main body. The second beam includes a second main body and second connecting plates, the second main body has a second groove, and two sides of the second main body are respectively connected to the second connecting plates. The second connecting plates are located at an opening of the second main body. The two second connecting plates are correspondingly connected to the two first connecting plates, and the first groove communicates with the second groove to form a hollow cavity.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic view of an energy storage rack according to the disclosure.
FIG. 2 is a schematic view of a part of the energy storage rack shown in FIG. 1.
FIG. 2a is a partial cross-sectional view of the structure shown in FIG. 2 according to embodiment one.
FIG. 2b is a partial cross-sectional view of the structure shown in FIG. 2 according to embodiment two.
FIG. 3 is an enlarged schematic view of portion A in FIG. 2.
FIG. 4 is an enlarged schematic view of portion B in FIG. 2.
FIG. 5 is a schematic view of a part of the energy storage rack according to an embodiment of the disclosure.
FIG. 6 is a schematic view of a vertical column according to embodiment one of the disclosure.
FIG. 7 is a schematic view of the vertical column according to embodiment two of the disclosure.
FIG. 8 is a schematic view of the energy storage rack matched with battery insertion boxes according to the disclosure.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

In addition, the technical features involved in the different embodiments of the disclosure described below can be combined with each other as long as the technical features do not conflict with each other. The following discussion provides various embodiments of the disclosure. Although each embodiment represents a single combination of the application, the various embodiments of the disclosure may be substituted or combined. The disclosure is therefore also to be considered to encompass all possible combinations of the same and/or different embodiments recited. If one embodiment includes A, B, C and another embodiment includes a combination of B and D, then the disclosure shall also be considered to include an embodiment including one or more of all other possible combinations of A, B, C, and D, even though this embodiment may not be explicitly described in the text below. In addition, the technical features involved in the different embodiments of the disclosure described below can be combined with each other as long as the technical features do not conflict with each other.

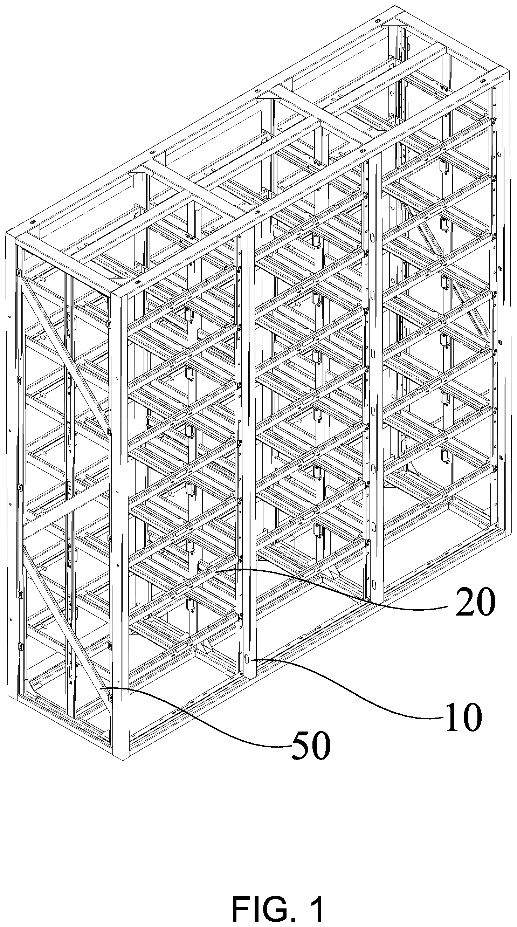

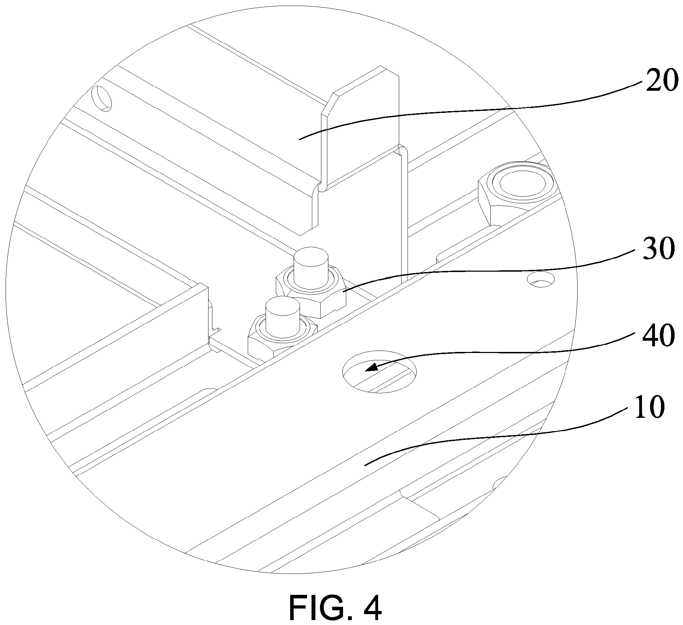

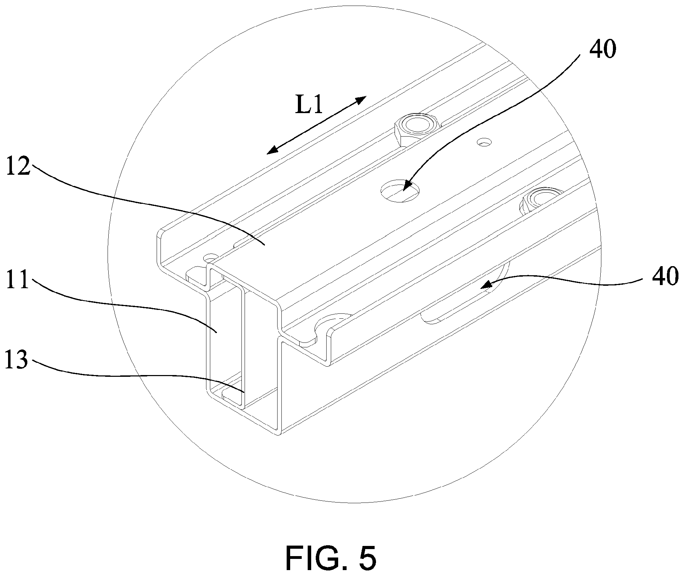

As shown in FIG. 1 to FIG. 7, an energy storage rack provided by the disclosure includes vertical columns 10 and horizontal beams 20 connected to each other. Specifically, the horizontal beams 20 are connected to first connecting plates 112. In a specific embodiment of the disclosure, a plurality of vertical columns 10 are arranged in a vertical direction, and a plurality of horizontal beams 20 are arranged in a horizontal direction. The vertical columns 10 and the horizontal beams 20 are connected horizontally and vertically to form the energy storage rack. To be specific, two ends of each horizontal beam 20 are respectively connected to two vertical columns 10, the vertical columns 10 are perpendicular to the horizontal beams 20, and the vertical columns 10 and the horizontal beams 20 enclose accommodating cavities for accommodating battery insertion boxes. In a preferred embodiment of the disclosure, the energy storage rack further includes inclined beams 50. Two ends of each inclined beam 50 are respectively connected to two vertical columns 10, and the inclined beams 50 are inclined with respect to the vertical columns 10. The arrangement of the inclined beams 50 increases the overall strength of the energy storage rack.

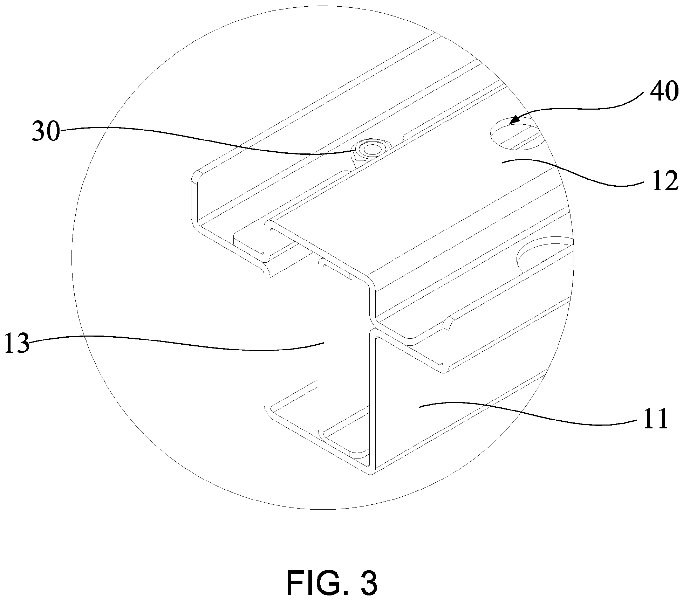

As shown in FIG. 3 and FIG. 6 to FIG. 7, the vertical column 10 is a hollow column structure form by a first beam 11 and a second beam 12 butting against each other.

The first beam 11 includes a first main body 111 and the first connecting plates 112, the first main body 111 has a first groove 113, and two sides of the first main body 111 are respectively connected to the first connecting plates 112. To be specific, the two first connecting plates 112 are symmetrically arranged on both sides of the first main body 111 and are located at an opening of the first groove 113. The first connecting plates 112 are respectively connected to end portions of the first main body 111, so that the first beam 11 as a whole has substantially a " 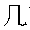 " shape, wherein the shape of " 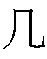 " is similar to "π".

The second beam 12 includes a second main body 121 and second connecting plates 122, the second main body 121 has a second groove 123, and two sides of the second main body 121 are respectively connected to the second connecting plates 122. The two second connecting plates 122 are correspondingly connected to the two first connecting plates 112, the first groove 113 communicates with the second groove 123 to form a hollow cavity, and the hollow cavity is the hollow part of the hollow column structure. In directions in which the first connecting plates 112 are away from the first main body 111, a length of each second connecting plate 122 is less than a length of each first connecting plate 112. To be specific, the two second connecting plates 122 are symmetrically arranged on both sides of the second main body 121 and are located at an opening of the second groove 123. The second connecting plates 122 are respectively connected to end portions of the second main body 121, so that the second beam 12 as a whole has substantially a " 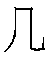 " shape, wherein the shape of " 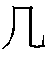 " is similar to "π".

In the energy storage rack provided by the disclosure, the first beam 11 is fixedly connected to the second beam 12 through the first connecting plates 112 and the second connecting plates 122. This connection manner is simple and may be conveniently implemented, such that the assembly efficiency of the vertical column is improved. Further, since a larger connection area is provided between the first beam 11 and the second beam 12, the connection strength between the first beam 11 and the second beam 12, the mechanical strength of the vertical column 10 formed by the first beam 11 and the second beam 12, as well as the overall strength of the energy storage rack are all ensured.

Further, as the first groove 113 communicates with the second groove 123 to form a cavity in the middle of the vertical column 10, on the one hand, the overall weight of the vertical column 10 is effectively reduced in a condition that the overall strength of the vertical column 10 is ensured. On the other hand, the first beam 11 and the second beam 12 are made to have a multi-folded structure, which is beneficial to the mechanical strength of the first beam 11 and the second beam 12, such that the vertical column 10 may not be easily broken, may not be easily deformed, and exhibits good reliability in use. Therefore, the overall reliability in use of the energy storage rack is improved, the probability of damage to the energy storage rack is reduced, the service life of the product is prolonged, and the market competitiveness of the product is increased. The multi-folded structure refers to a folded structure with three, four, or more folds.

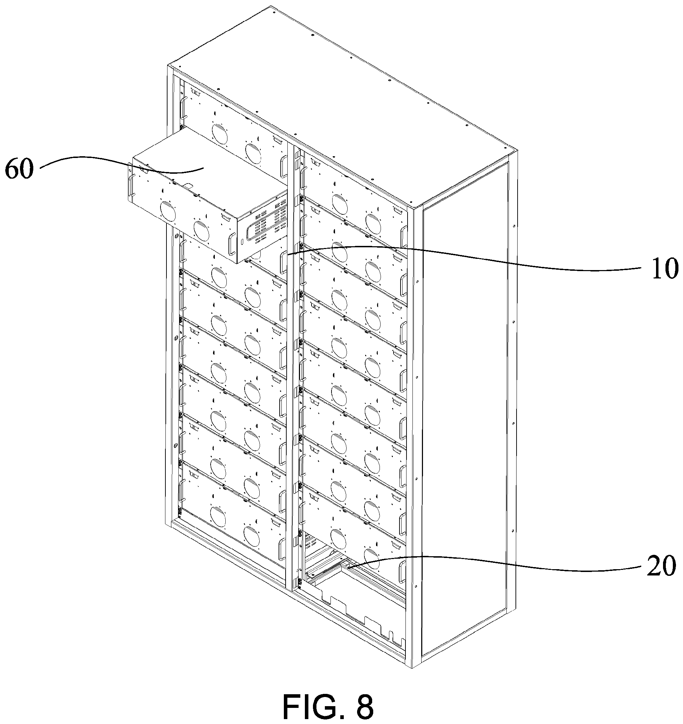

As shown in FIG. 3 and FIG. 6 to FIG. 8, in an embodiment of the disclosure, one end of each first connecting plate 112 away from the first main body 111 is provided with a reinforcement folded edge 14. To be specific, the reinforcement folded edge 14 is perpendicular to the first connecting plate 112.

Through the arrangement of the reinforcement folded edge 14, the number of folded edges of the first beam 11 is increased, such that the first beam 11 has more folded edge structures, and the mechanical strength of the first beam 11 is further improved. As such, the vertical column 10 formed by the first beam 11 may not be easily broken, may not be easily deformed, and exhibits good reliability in use. Therefore, the overall reliability in use of the energy storage rack is improved, the probability of damage to the energy storage rack is reduced, the service life of the product is prolonged, and the market competitiveness of the product is increased. Besides, through the arrangement of the reinforcement folded edge 14, the part of the vertical column 10 in contact with the battery insertion box 60 has no sharp corners. Therefore, the vertical column 10 is prevented from scratching the battery insertion box 60, and the reliability in use of the battery insertion box is thus ensured.

In another specific embodiment of the disclosure, one end of the first connecting plate away from the first main body is bent towards the surface of the first connecting plate to form a folded edge. The plate surface of the folded edge is attached to the plate surface of the first connecting plate, and the folded edge is parallel to the first connecting plate. Through the arrangement of the folded edge, the part of the vertical column in contact with the battery insertion box has no sharp corners. Therefore, the vertical column is prevented from scratching the battery insertion box, and the reliability in use of the battery insertion box is thus ensured.

As shown in FIG. 3, FIG. 6, and FIG. 7, in an embodiment of the disclosure, the first beam 11 is a beam formed by bending a sheet metal piece, and/or the second beam 12 is a beam formed by bending a sheet metal piece. That is, each of the first beam 11 and the second beam 12 is an integral structure made by an integral molding process.

The manufacturing process of bending and forming is simple, processing and manufacturing may be conveniently performed, and favorable production efficiency is provided, so that the manufacturing costs of the first beam 11 and the second beam 12 may be lowered, and the market competitiveness of the product is increased. Further, both the first beam 11 and the second beam 12 are integral structures, so the overall strength of the first beam 11 and the second beam 12 is ensured, and that the overall strength of the vertical column 10 formed by the first beam 11 and the second beam 12 is ensured. As such, the vertical column 10 may not be easily broken, may not be easily deformed, and exhibits good reliability in use, such that the reliability in use of the energy storage rack as a whole is improved.

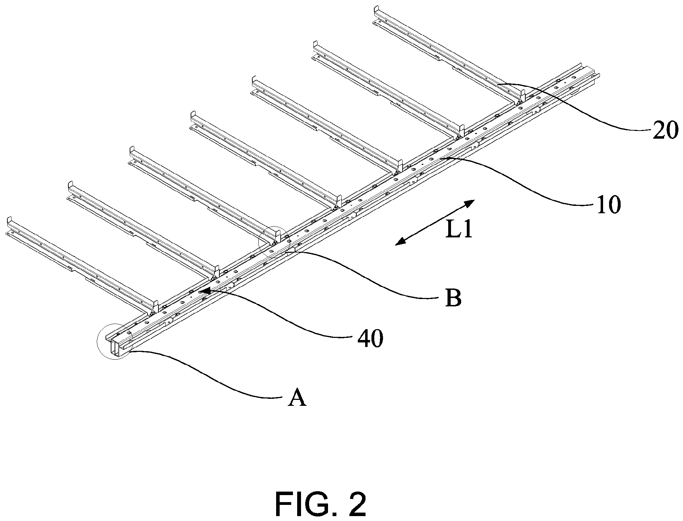

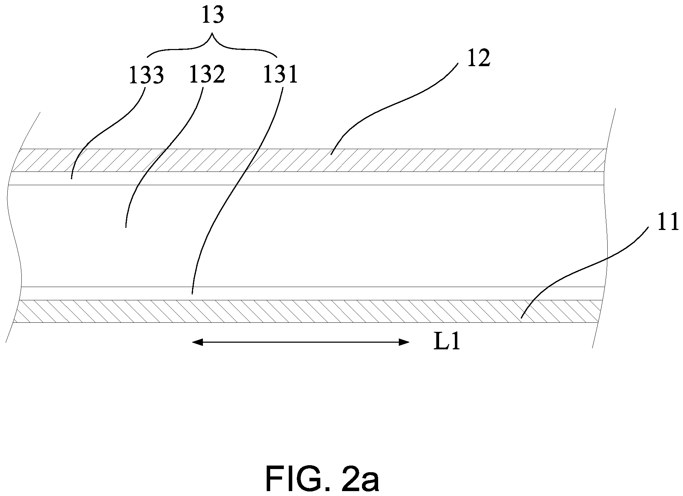

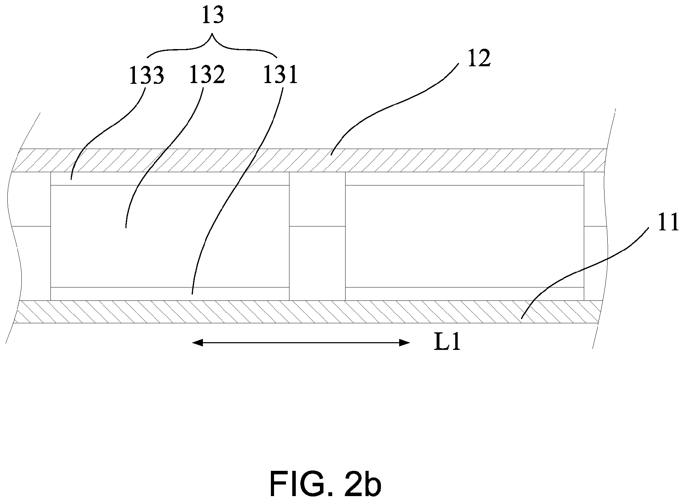

As shown in FIG. 2 and FIG. 3, in an embodiment of the disclosure, each first connecting plate 112 is provided with a plurality of nuts 30, and each first connecting plate 112 is provided with through holes (not shown) corresponding to the threaded holes of the nuts 30.

One end of a screw sequentially passes through the horizontal beam 20 and the through hole and is screwed to the nut 30, and the other end of the screw interferes with the horizontal beam 20. That is, the horizontal beam 20 is fixed to the vertical column 10 through the matching between the screw and the nut 30. The connection between the nut 30 and the screw is simple and exhibits high connection strength, such that the fixing strength between the horizontal beam 20 and the vertical column 10 is improved. Therefore, the overall strength of the energy storage rack is ensured, the service life of the product is prolonged, and the market competitiveness of the product is increased.

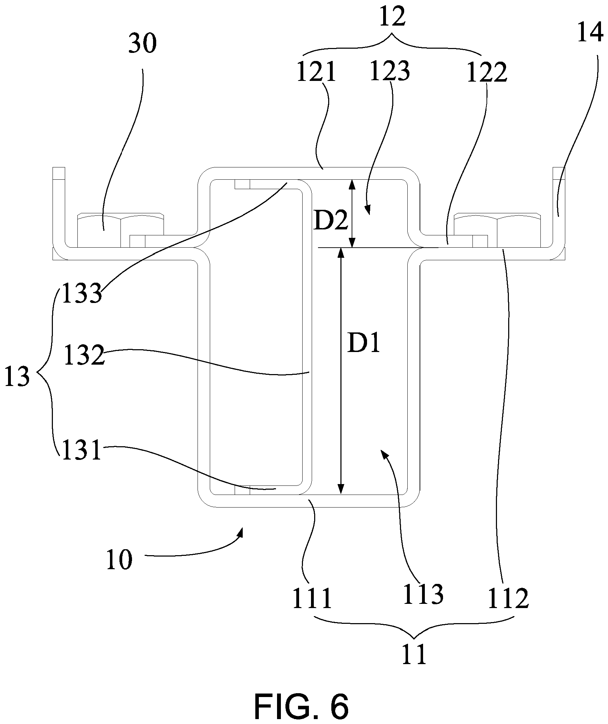

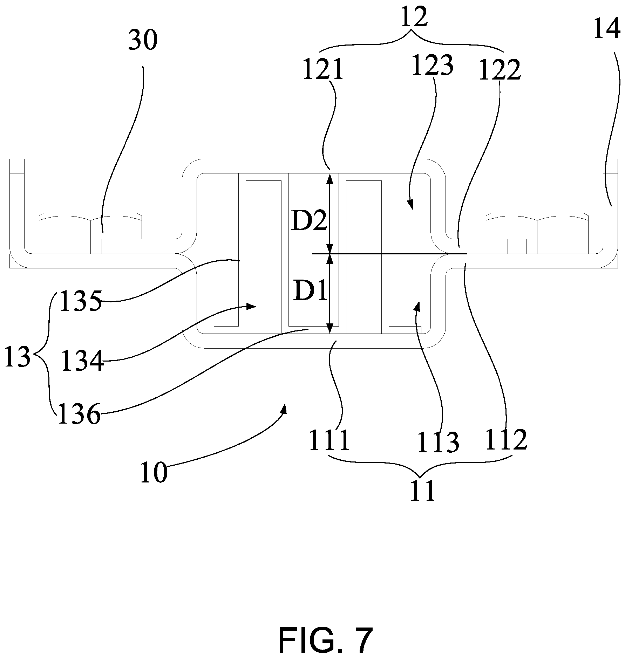

As shown in FIG. 6 and FIG. 7, in an embodiment of the disclosure, the second connecting plates 122 extend to the nut 30. In a specific embodiment of the disclosure, the length of each second connecting plate 122 is less than the length of each first connecting plate 112, so that each second connecting plate 122 does not interfere with the nut 30. In addition, each second connecting plate is also provided with an avoiding groove corresponding to the nut.

The extension of each second connecting plate 122 to the nut 30 leads to an increase in the thickness of the position corresponding to the first connecting plate 112, so that the nuts 30 are stably and securely fixed onto the first beam 11. As such, the fixing strength between the horizontal beam 20 and the vertical column 10 established based on the fixed connection between the screws and the nuts 30 is thereby ensured. Therefore, the overall strength of the energy storage rack is ensured, the service life of the product is prolonged, and the market competitiveness of the product is increased.

As shown in FIG. 6 and FIG. 7, in an embodiment of the disclosure, a depth D1 of the first groove 113 is 1 to 4 times a depth D2 of the second groove 123. In a specific embodiment of the disclosure, the depth D1 of the first groove 113 is the same as the depth D2 of the second groove 123.

By reasonably configuring the depth of the first groove 113 and the depth of the second groove 123, the strength of the first beam 11 and the second beam 12 is ensured. As such, the overall strength of the vertical column 10 formed by the first beam 12 and the second beam 10 is ensured, and the vertical column 10 may not be easily broken, may not be easily deformed, and exhibits good reliability in use. Therefore, the overall reliability in use of the energy storage rack is improved, the probability of damage to the energy storage rack is reduced, the service life of the product is prolonged, and the market competitiveness of the product is increased.

As shown in FIG. 2 to FIG. 5, in an embodiment of the disclosure, the first beam 11 is provided with a plurality of functional holes 40, and/or the second beam 12 is provided with a plurality of functional holes 40.

The functional holes 40 include but not limited to weight-reducing holes, copper row holes, wire-passing holes, etc. In the case of ensuring the overall strength of the column 10, the weight-reducing holes are disposed on the second beam and are located on the bottom of the second groove. The arrangement of the weight-reducing holes may reduce the weight of the vertical column 10, thereby reducing the overall weight of the energy storage rack and facilitating the transportation of the energy storage rack. The copper row holes are arranged on the first beam and are located on the side wall of the first groove, and the copper row holes are configured to allow copper rows to pass through conveniently. The wire-passing holes are arranged on the first beam and are located on the side wall of the first groove. A wire may be routed inside the vertical column 10 through the wire-passing holes, which facilitates the wiring of the wire. Further, when the inner wall of each vertical column 10 needs to be sprayed with plastic, the inner wall of the vertical column 10 may be sprayed with plastic through the functional holes 40, so that the inner wall of the vertical column 10 may be conveniently sprayed with plastic.

In the disclosure, the shape of the functional holes may be circular, oblong, oval, etc., which are not listed herein one by one. The functional holes may be placed at any position of the vertical columns according to the needs, and a person having ordinary skill in the art may select the shape and arrangement positions of the functional holes according to needs.

As shown in FIG. 3, FIG. 6, and FIG. 7, in an embodiment of the disclosure, the vertical column 10 further includes a reinforcement beam 13.

The reinforcement beam 13 is supported between the first beam 11 and the second beam 12, and the reinforcement beam 13 is fixedly connected to the first beam 11 and the second beam 12. That is, the reinforcement beam 13 is arranged in the hollow cavity of the vertical column 10.

As shown in FIG. 2 and FIG. 2a, in a specific embodiment of the disclosure, one reinforcement beam 13 is arranged in the vertical column 10, and the reinforcement beam 13 is arranged in a length direction L1 of the vertical column 10. To be specific, a length of the reinforcement beam 13 is the same as a length of the vertical column 10, so that the reinforcement beam 13 may effectively provide support for the vertical column 10. Alternatively, as shown in FIG. 2b, a plurality of reinforcement beams 13 are arranged in the vertical column 10, the plurality of reinforcement beams 13 are arranged in the length direction L1 of the vertical column 10, and the plurality of reinforcement beams 13 are arranged in the vertical column 10 at equal intervals. The overall weight of the energy storage rack may be effectively reduced while the reinforcement beam 13 may effectively support the vertical column 10.

The reinforcement beam 13 provides a supporting force for the first beam 11 and the second beam 12, so that the impact resistance capability of the vertical column 10 is improved. As such, the overall strength of the vertical column is improved, and the vertical column 10 may not be easily broken, may not be easily deformed, and exhibits good reliability in use. Therefore, the overall reliability in use of the energy storage rack is improved, the probability of damage to the energy storage rack is reduced, the service life of the product is prolonged, and the market competitiveness of the product is increased.

Several embodiments of the reinforcement beam 13 are described below with reference to the accompanying drawings.

### Embodiment One

As shown in FIG. 6, in an embodiment of the disclosure, the reinforcement beam 13 includes a first plate 131, a second plate 132, and a third plate 133 connected in sequence.

The first plate 131 and the third plate 133 are located on a same side of the second plate 132, the first plate 131 is connected to the first beam 11, and the third plate 133 is connected to the second beam 12. To be specific, the first plate 131 is connected to a bottom wall of the first groove 113, and the third plate 133 is connected to a bottom wall of the second groove 123. In a specific embodiment of the disclosure, a plate surface of the first plate 131 is attached to a bottom surface of the first groove 113, and a plate surface of the third plate 133 is attached to a bottom surface of the second groove 123.

The reinforcement beam 13 of the abovementioned structure has a "C" shape as a whole. The first plate 131 ensures the connection area between the reinforcement beam 13 and the first beam 11, and the third plate 133 ensures the connection area between the reinforcement beam 13 and the second beam 12, such that the connection strength between the reinforcement beam 13 and the first beam 11 and the second beam 12 is ensured. The second plate 132 provides a supporting force for the first beam 11 and the second beam 12, so that the reinforcement beam 13 effectively provides support for the first beam 11 and the second beam 12. As such, the impact resistance capability of the vertical column 10 is enhanced, the overall strength of the vertical column is improved, and the vertical column 10 may not be easily broken, may not be easily deformed, and exhibits good reliability in use. Therefore, the overall reliability in use of the energy storage rack is improved, the probability of damage to the energy storage rack is reduced, the service life of the product is prolonged, and the market competitiveness of the product is increased.

### Embodiment Two

As shown in FIG. 7, in an embodiment of the disclosure, the reinforcement beam 13 has a plurality of third grooves 134, and opening directions of two adjacent third grooves 134 are opposite. In a specific embodiment of the disclosure, the reinforcement beam 13 includes a plurality of vertical plates 135 and a plurality of horizontal plates 136, and the horizontal plates 136 and the vertical plates 135 are arranged in an alternating manner. Two vertical plates 135 and one horizontal plate 136 enclose one third groove 134. A part of the horizontal plates 136 are attached to the bottom surface of the first groove 113, and another part of the horizontal plates 136 are attached to the bottom surface of the second groove 123. The plurality of vertical plates 135 are supported between the first beam 11 and the second beam 12.

The reinforcement beam 13 of the abovementioned structure has a square wave shape as a whole, so that a plurality of connection surfaces are provided between the reinforcement beam 13 and the first beam 11 and the second beam 12. Therefore, the connection area between the reinforcement beam 13 and the first beam 11 and the connection area between the reinforcement beam 13 and the second beam 12 are increased, so as to ensure the connection strength between the reinforcement beam 13 and the first beam 11 and the second beam 12. In addition, multiple parts of the reinforcement beam 13 provide supporting forces for the first beam 11 and the second beam 12, so that the reinforcement beam 13 effectively supports the first beam 11 and the second beam 12. As such, the impact resistance capability of the vertical column 10 is enhanced, the overall strength of the vertical column is improved, and the vertical column 10 may not be easily broken, may not be easily deformed, and exhibits good reliability in use. Therefore, the overall reliability in use of the energy storage rack is improved, the probability of damage to the energy storage rack is reduced, the service life of the product is prolonged, and the market competitiveness of the product is increased.

A person having ordinary skill in the art should understand that, in addition to the abovementioned shapes, the reinforcement beam may also be I-shaped, Z-shaped, mouth-shaped, etc., which are not listed herein one by one.

Note that in the description of the disclosure, the terms "first", "second", "third", etc. are only used for descriptive purposes and cannot be understood as indicating or implying relative importance. Note that in the description of the disclosure, unless clearly specified and defined otherwise,

Note that in the description of the disclosure, unless clearly specified and defined otherwise, the terms "mounted", "connected", and "connecting" should be understood in a broad sense. The term "plurality" refers to one or more than one unless specifically defined otherwise. For a person having ordinary skill in the art, the specific meaning of the abovementioned terms in the disclosure can be understood according to specific circumstances.

Other embodiments of the disclosure will be apparent to those skilled in the art from consideration of the specification and practice of the disclosure disclosed herein. The specification and embodiments are illustrative.

## Claims

1. An energy storage rack, comprising vertical columns (10) and horizontal beams (20) connected to each other, wherein the vertical columns (10) and the horizontal beams (20) enclose accommodating cavities for accommodating battery insertion boxes, wherein:
each vertical column (10) is a hollow column structure formed by a first beam (11) and a second beam (12) butting against each other;
the first beam (11) comprises a first main body (111) and first connecting plates (112), the first main body (111) has a first groove (113), two sides of the first main body (111) are respectively connected to the first connecting plates (112), and the first connecting plates (112) are located at an opening of the first main body (111); and
the second beam (12) comprises a second main body (121) and second connecting plates (122), the second main body (121) has a second groove (123), two sides of the second main body (121) are respectively connected to the second connecting plates (122), the second connecting plates (122) are located at an opening of the second main body (121), the two second connecting plates (122) are correspondingly connected to the two first connecting plates (112), and the first groove (113) communicates with the second groove (123) to form a hollow cavity.

2. The energy storage rack according to claim 1, wherein the vertical column (10) further comprises a reinforcement beam (13), the reinforcement beam (13) is supported between the first beam (11) and the second beam (12) and is located in the hollow cavity, and the reinforcement beam (13) is fixedly connected to the first beam (11) and the second beam (12).

3. The energy storage rack according to claim 2, wherein the reinforcement beam (13) is disposed in a length direction (L1) of the vertical column (10).

4. The energy storage rack according to claim 2, wherein the reinforcement beam (13) comprises a first plate (131), a second plate (132), and a third plate (133) connected in sequence, the first plate (131) and the third plate (133) are located on a same side of the second plate (132), the first plate (131) is connected to the first beam (11), and the third plate (133) is connected to the second beam (12).

5. The energy storage rack according to claim 4, wherein:
a plate surface of the first plate (131) is attached to a bottom surface of the first groove (113); and
a plate surface of the third plate (133) is attached to a bottom surface of the second groove (123).

6. The energy storage rack according to claim 2, wherein the reinforcement beam (13) has a plurality of third grooves (134), and opening directions of adjacent two of the third grooves (134) are opposite.

7. The energy storage rack according to claim 6, wherein the reinforcement beam (13) comprises a plurality of vertical plates (135) and a plurality of horizontal plates (136), the horizontal plates and the vertical plates (135) are arranged in an alternating manner, two of the vertical plates (135) and one of the horizontal plates (136) enclose one third groove (134), plate surfaces of a part of the horizontal plates (136) are attached to a bottom surface of the first groove (113), plate surfaces of another part of the horizontal plates (136) are attached to a bottom surface of the second groove (123), and the plurality of vertical plates (135) are supported between the first beam (11) and the second beam (12).

8. The energy storage rack according to any one of claims 1-7, wherein one end of each first connecting plate (112) away from the first main body (111) is provided with a reinforcement folded edge (14).

9. The energy storage rack according to any one of claims 1-7, wherein:
the first beam (11) is a beam formed by bending a sheet metal piece; and/or
the second beam (12) is a beam formed by bending a sheet metal piece.

10. The energy storage rack according to any one of claims 1-7, wherein each first connecting plate (112) is provided with a plurality of nuts (30), and each first connecting plate (112) is provided with through holes corresponding to threaded holes of the nuts (30).

11. The energy storage rack according to claim 10, wherein the second connecting plates (122) extend to the nuts (30).

12. The energy storage rack according to any one of claims 1-7, wherein a depth of the first groove (113) is 1 to 4 times a depth of the second groove (123).

13. The energy storage rack according to any one of claims 1-7, wherein:
the first beam (11) is provided with a plurality of functional holes (40); and/or
the second beam (12) is provided with a plurality of functional holes (40).

14. The energy storage rack according to any one of claims 1-7, wherein the horizontal beams (20) are connected to the first connecting plates (112).

## Patentansprüche

1. Energiespeichergestell, das vertikale Säulen (10) und horizontale Träger (20) umfasst, die miteinander verbunden sind, wobei die vertikalen Säulen (10) und die horizontalen Träger (20) Aufnahmeräume zur Aufnahme von Batterieeinschubboxen einschließen, wobei:
jede vertikale Säule (10) eine hohle Säulenstruktur ist, die durch einen ersten Träger (11) und einen zweiten Träger (12) gebildet wird, die aneinanderstoßen;
der erste Träger (11) einen ersten Hauptkörper (111) und erste Verbindungsplatten (112) umfasst, der erste Hauptkörper (111) eine erste Nut (113) aufweist, zwei Seiten des ersten Hauptkörpers (111) jeweils mit den ersten Verbindungsplatten (112) verbunden sind und die ersten Verbindungsplatten (112) sich an einer Öffnung des ersten Hauptkörpers (111) befindet; und
der zweite Träger (12) einen zweiten Hauptkörper (121) und zweite Verbindungsplatten (122) umfasst, der zweite Hauptkörper (121) eine zweite Nut (123) aufweist, zwei Seiten des zweiten Hauptkörpers (121) jeweils mit den zweiten Verbindungsplatten (122) verbunden sind, die zweiten Verbindungsplatten (122) sich an einer Öffnung des zweiten Hauptkörpers (121) befinden, die beiden zweiten Verbindungsplatten (122) entsprechend mit den beiden ersten Verbindungsplatten (112) verbunden sind und die erste Nut (113) mit der zweiten Nut (123) in Verbindung steht, um einen Hohlraum zu bilden.

2. Energiespeichergestell gemäß Anspruch 1, wobei die vertikale Säule (10) ferner einen Verstärkungsträger (13) umfasst, der Verstärkungsträger (13) zwischen dem ersten Träger (11) und dem zweiten Träger (12) gestützt wird und sich in dem Hohlraum befindet, und der Verstärkungsträger (13) fest mit dem ersten Träger (11) und dem zweiten Träger (12) verbunden ist.

3. Energiespeichergestell gemäß Anspruch 2, wobei der Verstärkungsträger (13) in einer Längsrichtung (L1) der vertikalen Säule (10) angeordnet ist.

4. Energiespeichergestell gemäß Anspruch 2, wobei der Verstärkungsträger (13) eine erste Platte (131), eine zweite Platte (132) und eine dritte Platte (133) umfasst, die in Folge verbunden sind, wobei sich die erste Platte (131) und die dritte Platte (133) auf derselben Seite der zweiten Platte (132) befinden, die erste Platte (131) mit dem ersten Träger (11) verbunden ist und die dritte Platte (133) mit dem zweiten Träger (12) verbunden ist.

5. Energiespeichergestell gemäß Anspruch 4, wobei:
eine Plattenoberfläche der ersten Platte (131) an einer Bodenfläche der ersten Nut (113) angebracht ist; und
eine Plattenoberfläche der dritten Platte (133) an einer Bodenfläche der zweiten Nut (123) angebracht ist.

6. Energiespeichergestell gemäß Anspruch 2, wobei der Verstärkungsträger (13) eine Vielzahl von dritten Nuten (134) aufweist und die Öffnungsrichtungen von zwei der benachbarten dritten Nuten (134) entgegengesetzt sind.

7. Energiespeichergestell gemäß Anspruch 6, wobei der Verstärkungsträger (13) eine Vielzahl von vertikalen Platten (135) und eine Vielzahl von horizontalen Platten (136) umfasst, die horizontalen Platten und die vertikalen Platten (135) in einer abwechselnden Weise angeordnet sind, zwei der vertikalen Platten (135) und eine der horizontalen Platten (136) eine dritte Nut (134) umschließen, Plattenoberflächen eines Teils der horizontalen Platten (136) an einer Bodenfläche der ersten Nut (113) angebracht sind, Plattenoberflächen eines anderen Teils der horizontalen Platten (136) an einer Bodenfläche der zweiten Nut (123) angebracht sind, und die Vielzahl von vertikalen Platten (135) zwischen dem ersten Träger (11) und dem zweiten Träger (12) gestützt sind.

8. Energiespeichergestell gemäß einem der Ansprüche 1 bis 7, wobei ein Ende jeder der ersten Verbindungsplatte (112), das von dem ersten Hauptkörper (111) entfernt ist, mit einer verstärkten gefalteten Kante (14) bereitgestellt wird.

9. Energiespeichergestell gemäß einem der Ansprüche 1 bis 7, wobei:
der erste Träger (11) ein Träger ist, der durch Biegen eines Blechstücks gebildet wird;
und/oder
der zweite Träger (12) ein Träger ist, der durch Biegen eines Blechstück gebildet wird.

10. Energiespeichergestell gemäß einem der Ansprüche 1 bis 7, wobei jede erste Verbindungsplatte (112) mit einer Vielzahl von Muttern (30) bereitgestellt wird und jede erste Verbindungsplatte (112) mit Durchgangslöchern bereitgestellt wird, die Gewindelöchern der Muttern (30) entsprechen.

11. Energiespeichergestell gemäß Anspruch 10, wobei sich die zweiten Verbindungsplatten (122) bis zu den Muttern (30) erstrecken.

12. Energiespeichergestell gemäß einem der Ansprüche 1 bis 7, wobei eine Tiefe der ersten Nut (113) das 1- bis 4-fache einer Tiefe der zweiten Nut (123) beträgt.

13. Energiespeichergestell gemäß einem der Ansprüche 1 bis 7, wobei:
der erste Träger (11) mit einer Vielzahl von Funktionslöchern (40) bereitgestellt wird;
und/oder
der zweite Träger (12) mit einer Vielzahl von Funktionslöchern (40) bereitgestellt wird.

14. Energiespeichergestell gemäß einem der Ansprüche 1-7, wobei die horizontalen Träger (20) mit den ersten Verbindungsplatten (112) verbunden sind.

## Revendications

1. Crémaillère de stockage d'énergie, comprenant des colonnes verticales (10) et des poutres horizontales (20) reliées entre elles, dans laquelle les colonnes verticales (10) et les poutres horizontales (20) renferment des cavités de logement destinées à accueillir des boîtiers d'insertion de batterie, dans laquelle :
chaque colonne verticale (10) est une structure de colonne creuse formée par une première poutre (11) et
une deuxième poutre (12) venant s'appuyer l'une contre l'autre ;
la première poutre (11) comprend un premier corps principal (111) et des premières plaques de connexion (112), le premier corps principal (111) comporte une première rainure (113), deux côtés du premier corps principal (111) sont respectivement reliés aux premières plaques de connexion (112), et les premières plaques de connexion (112) sont situées au niveau d'une ouverture du premier corps principal (111) ; et la deuxième poutre (12) comprend un deuxième corps principal (121) et des deuxièmes plaques de connexion (122), le deuxième corps principal (121) comporte une deuxième rainure (123), deux côtés du deuxième corps principal (121) sont respectivement reliés aux deuxièmes plaques de connexion (122), les deuxièmes plaques de connexion (122) sont situées au niveau d'une ouverture du deuxième corps principal (121), les deux deuxièmes plaques de connexion (122) sont reliées de manière correspondante aux deux premières plaques de connexion (112), et la première rainure (113) communique avec la deuxième rainure (123) afin de former une cavité creuse.

2. Crémaillère de stockage d'énergie selon la revendication 1, dans laquelle la colonne verticale (10) comprend en outre une poutre de renfort (13), la poutre de renfort (13) est supportée entre la première poutre (11) et la seconde poutre (12) et est située dans la cavité creuse, et la poutre de renfort (13) est reliée de manière fixe à la première poutre (11) et à la seconde poutre (12).

3. Crémaillère de stockage d'énergie selon la revendication 2, dans laquelle la poutre de renfort (13) est disposée dans une direction de longueur (L1) de la colonne verticale (10).

4. Crémaillère de stockage d'énergie selon la revendication 2, dans laquelle la poutre de renfort (13) comprend une première plaque (131), une deuxième plaque (132), et une troisième plaque (133) reliées en séquence, la première plaque (131) et la troisième plaque (133) sont situées sur un même côté de la deuxième plaque (132), la première plaque (131) est reliée à la première poutre (11), et la troisième plaque (133) est reliée à la deuxième poutre (12).

5. Crémaillère de stockage d'énergie selon la revendication 4, dans laquelle :
une surface de plaque de la première plaque (131) est fixée à une surface inférieure de la première rainure (113) ; et une surface de plaque de la troisième plaque (133) est fixée à une surface inférieure de la deuxième rainure (123).

6. Crémaillère de stockage d'énergie selon la revendication 2, dans laquelle la poutre de renfort (13) présente une pluralité de troisièmes rainures (134), et les directions d'ouverture de deux rainures adjacentes des troisièmes rainures (134) sont opposées.

7. Crémaillère de stockage d'énergie selon la revendication 6, dans laquelle la poutre de renfort (13) comprend une pluralité de plaques verticales (135) et une pluralité de plaques horizontales (136), les plaques horizontales et les plaques verticales (135) sont disposées de manière alternée, deux des plaques verticales (135) et une des plaques horizontales (136) entourent une troisième rainure (134), les surfaces de plaque d'une partie des plaques horizontales (136) sont fixées à une surface inférieure de la première rainure (113), les surfaces de plaque d'une autre partie des plaques horizontales (136) sont fixées à une surface inférieure de la deuxième rainure (123), et la pluralité de plaques verticales (135) sont supportées entre la première poutre (11) et la seconde poutre (12).

8. Crémaillère de stockage d'énergie selon l'une quelconque des revendications 1 à 7, dans laquelle une extrémité de chaque première plaque de liaison (112) éloignée du premier corps principal (111) est pourvue d'un bord plié de renforcement (14).

9. Crémaillère de stockage d'énergie selon l'une quelconque des revendications 1 à 7, dans laquelle :
la première poutre (11) est une poutre formée par le pliage d'une pièce de tôle ; et/ou
la seconde poutre (12) est une poutre formée par le pliage d'une pièce de tôle.

10. Crémaillère de stockage d'énergie selon l'une quelconque des revendications 1 à 7, dans laquelle chaque première plaque de connexion (112) est pourvue d'une pluralité d'écrous (30), et chaque première plaque de connexion (112) est pourvue de trous traversants correspondant à des trous filetés des écrous (30).

11. Crémaillère de stockage d'énergie selon la revendication 10, dans laquelle les secondes plaques de connexion (122) s'étendent jusqu'aux écrous (30).

12. Crémaillère de stockage d'énergie selon l'une quelconque des revendications 1 à 7, dans laquelle une profondeur de la première rainure (113) est de 1 à 4 fois une profondeur de la seconde rainure (123).

13. Crémaillère de stockage d'énergie selon l'une quelconque des revendications 1 à 7, dans laquelle :
la première poutre (11) est pourvue d'une pluralité de trous fonctionnels (40) ; et/ou
la seconde poutre (12) est pourvue d'une pluralité de trous fonctionnels (40).

14. Crémaillère de stockage d'énergie selon l'une quelconque des revendications 1 à 7, dans laquelle les poutres horizontales (20) sont reliées aux premières plaques de connexion (112).
